# EUROPEAN PATENT SPECIFICATION

(11) **EP 3 544 023 B1**
(45) Date of publication and mention of the grant of the patent: **31.07.2024**
(21) Application number: 17871934.0
(22) Date of filing: 09.08.2017
(51) Int. Cl.: G21K 1/02, G01V 5/00

(54) **COLLIMATOR, COLLIMATOR MOUNTING DEVICE AND METHOD , AND SECURITY INSPECTION MACHINE**
KOLLIMATOR, KOLLIMATOR-MONTAGESTRUKTUR UND KOLLIMATOR-MONTAGEVERFAHREN, SOWIE SICHERHEITSINSPEKTIONSMASCHINE
COLLIMATEUR, STRUCTURE ET PROCÉDÉ DE MONTAGE DU COLLIMATEUR, AINSI QUE MACHINE D'INSPECTION DE SÉCURITÉ

(30) Priority: 16.11.2016 CN 201611022252
(43) Date of publication of application: 25.09.2019
(73) Proprietor: Nuctech Company Limited, Beijing 100084 (CN)
(72) Inventor: LI, Ximeng, Beijing 100084 (CN); WANG, Qinchan, Beijing 100084 (CN); YANG, Zhongrong, Beijing 100084 (CN); ZHANG, Jinyu, Beijing 100084 (CN)
(74) Representative: Boult Wade Tennant LLP
(86) International application number: PCT/CN2017/096541
(87) International publication number: WO 2018/090681

(56) References cited:
- WO-A1-2005/084550
- CN-A- 101 114 534
- CN-A- 103 489 496
- CN-A- 103 829 963
- CN-A- 105 931 694
- CN-A- 106 373 629
- CN-U- 206 340 354
- JP-U- S4 736 286
- JP-U- S5 429 082
- JP-U- S5 714 100
- JP-U- S6 240 555
- US-B1- 6 778 636

## Description

### TECHNICAL FIELD

The present disclosure relates to the technical field of X-ray security equipment accessories, and in particular relates to a collimator and a collimator mounting device.

### BACKGROUND

A collimating device of a security inspection machine can be composed of two lead-antimony alloy plates that can block rays and are mounted side by side on a base plate, with a narrow gap left between the two plates to allow useful rays to pass through. The collimating device is usually mounted in a box for shielding the rays. Due to inevitable machining and assembly errors and deformation of supporting members, the collimating device generally needs to be adjusted on a left and right direction so that main beam of the rays can illuminate onto a detector plate by passing through the gap between the two plates.

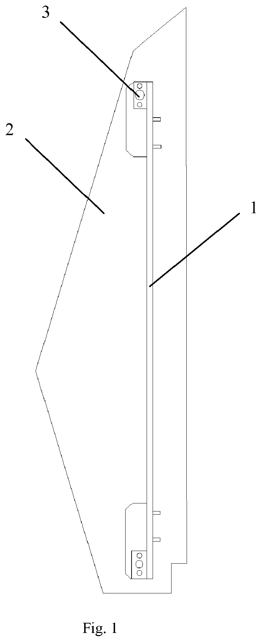

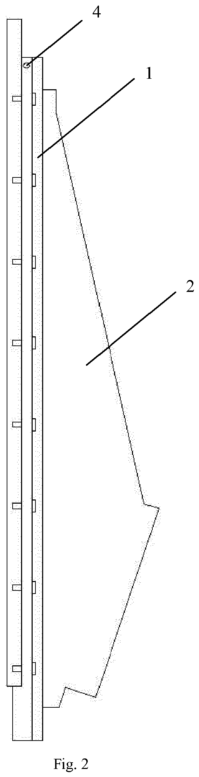

There are generally two kinds of arrangements for fixing the collimating device. One arrangement is shown in Fig. 1, where a collimator 1 is completely contained within a shielding box 2, and is adjusted and fixed by screws 3. With such an adjustment and mounting arrangement by use of screws, it is very inconvenient to remove the collimator, and it is necessary to remove the shielding box as a whole before removing the collimator. Moreover, it is very difficult to adjust a width of a collimating slit during adjustment of the equipment. The other arrangement is shown in Fig. 2, where two opposite ends of a collimator 1 are fixed by screws outside of a shielding box 2, and the collimator 1 is adjusted by left and right set screws 4. Since the two opposite ends of the collimator are disposed out of the shielding box and are fixed by screws, in the case that the shielding box is mounted vertically in a side view, people cannot operate the lower left and right set screws in a standing posture because the left and right set screws are located at the bottom of the equipment. In addition, electrical components are generally arranged at the bottom of the equipment, and thus occupy operating space of the left and right set screws, resulting in that it is necessary to remove the electrical components to make adjustment space.

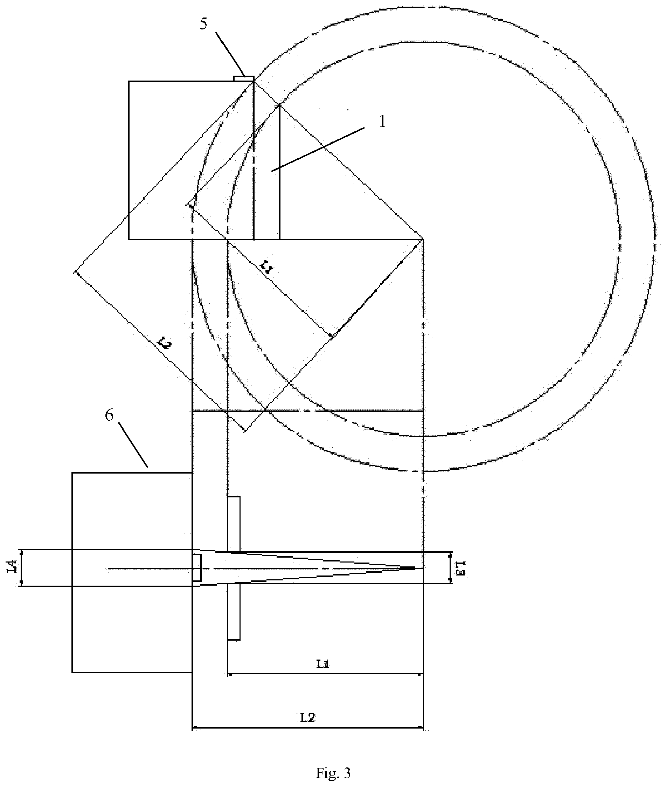

In the above two arrangements for fixing the collimating device, since the collimator is arranged in parallel with channel wall surfaces, it is necessary for the collimating device to have dimensions larger than (the second arrangement) or slight smaller than (the first arrangement) the channel in length and width directions of the channel, to achieve the collimation for the entire channel. For large-channel security inspection machine, this will bring a collimator with very large length and weight, and it is easy for the collimator to deform. Besides, a width of the collimating slit is generally about 1 mm, and a width of the rays having passed through the collimating slit will be magnified by a certain ratio depending on specific structure of the collimating device and the detector plate. As shown in Fig. 3, a width of the rays projecting on an end detector plate 5 is L4=L3×L2/L1. In various actual types of the machines, L2/L1 is slightly larger than 1. If the width of the collimating slit is 1 mm, L4 is also slightly larger than 1 mm. However, an illumination width of the rays on a detector plate 6 at other positions is significantly larger than that on the end detector plate, and a too narrow illumination width may tend to cause a difficult alignment among a strip crystal of detector plate, the collimating slit, and a target. (In Fig. 3, L1: a distance between a target of an irradiation machine and a collimator, L2: a distance between the target of the irradiation machine and a strip crystal of detector plate, L3: the width of the collimating slit, and L4: a width of rays projecting on the detector plate after passing through the collimating slit).

JP S54 29082U discloses a semifixed gap device for an X-ray beam splitter, wherein a stopper is provided on an edge of an end surface of a main body case so that the gap plate can be magnetically attracted to the end surface of the main body case and held at a predetermined position.

JP S47 36286U discloses a slit for X-ray optical axis indexing, wherein a slit plate is slidably provided on the front surface of the X-ray incident window of the X-ray detector, two holes are formed on the slit plate, and the centers of the two holes can be respectively aligned with the optical axis of the X-ray detector by sliding the slit plate; further, one of the two holes is bisected along the sliding direction of the slit plate and is shielded, and a region of the other hole different from that of said one hole is shielded by the shielding plate which is centered by abutting the shielding plates.

### SUMMARY

It is an object of the present disclosure to provide a collimator with a more rational configuration and easy to be adjusted, and a mounting device thereof.

To this end, the present disclosure employs the following technical solutions:
A system comprising a collimator and a collimator mounting device, characterized in that,
the collimator comprising:
   a T-shaped base plate, comprising a longitudinal plate and a transverse plate; and
   two lead plates arranged side by side and in parallel to each other, wherein the two lead plates are fixed to the longitudinal plate of the T-shaped base plate and extend to the transverse plate of the T-shaped base plate, and
the collimator mounting device comprises a shielding box, and the shielding box is formed in a box shape constituted by an intermediate connecting plate, a left plate a right plate and a cover plate, wherein a first ray opening is provided in the intermediate connecting plate, the transverse plate of the T shaped base plate in the collimator is obliquely inserted into grooves of
the left and right plates so that an acute angle is formed between the collimator and the intermediate connecting plate and that a gap between the two lead plates of the collimator is aligned with the first ray opening.

As a preferred embodiment, the two lead plates are arranged such that two opposite ends of each lead plate are aligned with one end of the longitudinal plate of the T-shaped base plate and an edge of the transverse plate respectively, and respective outer sides of the lead plates are aligned with two opposite sides of the longitudinal plate respectively.

As a preferred embodiment, the T-shaped base plate comprises folded portions at its edges which face the lead plates.

As a preferred embodiment, the transverse plate of the T-shaped base plate further comprises fixing holes at its four corners.

As a preferred embodiment, each fixing hole is formed as a kidney-shaped slot.

As a preferred embodiment, a supporting plate is obliquely disposed between the left and right plates, wherein the supporting plate comprises a second ray opening; the collimator is mounted on the supporting plate with the gap between the two lead plates aligned with the second ray opening.

As a preferred embodiment, a left adjusting box is provided on the left plate and a right adjusting box is provided on the right plate, wherein two opposite sides of the transverse plate of the T-shaped base plate are accommodated within the left and right adjusting boxes respectively, and the T-shaped base plate is fixedly connected to the left and right adjusting boxes after a fine adjustment of the collimator is completed.

As a preferred embodiment, each of the left and right plates comprises a groove, and the supporting plate is disposed adjacent to the grooves and parallel to an extending direction of the grooves, wherein the transverse plate of the T-shaped base plate is inserted into the grooves, and the collimator mounting device further comprises a top cover covering the grooves.

The present disclosure further provides a security inspection machine, comprising a radiation emitting device, and the radiation emitting device is applied with the system according to any of the embodiments as described above.

The present disclosure further provides a method of mounting a collimator to a collimator mounting device, comprising steps of:
inserting the collimator obliquely into left and right plates along a supporting plate, wherein a transverse plate of a T-shaped base plate in the collimator is placed in grooves of the left and right plates, and two opposite sides of the transverse plate are accommodated within left and right adjusting boxes respectively;
adjusting a position of the collimator to align a gap between two lead plates with a first ray opening of the shielding box and a second ray opening on the supporting plate;
fixedly connecting the left and right adjusting boxes with the T-shaped base plate, after finely adjusting a position of the T-shaped base plate in the collimator; and
covering a top cover on the grooves.

In the collimator, the collimator mounting device and the collimator mounting method of the present disclosure, the base plate of the collimator is a member of T-shape, which not only can provide sufficient mounting space for the two lead plates, thus shortening the length of the lead plates to reduce deformation, but also can facilitate the insertion of the collimator so as to enable the collimator to be directly and obliquely inserted into the shielding box, facilitating the assembly, disassembly and adjustment of the collimator. Moreover, the operation position is located in the middle of the device in a height direction, the operating height is moderate, and thus the operator can make an operation in a standing posture for most of the security inspection machines with such a device, which is convenient and labor-saving. Further, the arrangement space of the electrical components at the bottom of the device will not be occupied, which can solve the problem that the end detector plate has a small illumination area, and also can solve the problem that the collimator is difficult to be adjusted. Also, it is easier to assemble and adjust the security inspection machine using the collimator and the collimator mounting device provided by the present disclosure.

### BRIEF DESCRIPTION OF THE DRAWINGS

Fig. 1 is a side view of a first conventional collimator mounting device.
Fig. 2 is a side view of a second conventional collimator mounting device.
Fig. 3 is an explanatory diagram of a ray width during an operation of a conventional collimator mounting device.
Fig. 4 is a perspective view of a collimator according to an embodiment of the present disclosure.
Fig. 5 is an exploded view of a collimator mounting device according to an embodiment of the present disclosure.
Fig. 6 is a perspective view of a collimator mounting device according to an embodiment of the present disclosure.
Fig. 7 is a schematic view of disassembly and assembly of a collimator mounting device according to an embodiment of the present disclosure.
Fig. 8 is a cross-sectional view taken along the line D-D of Fig. 7.
Fig. 9 is an explanatory diagram of a ray width during operation of a collimator mounting device according to an embodiment of the present disclosure.

In Fig. 1 to Fig. 3: 1-collimator, 2-shielding box, 3-screw, 4-left and right set screws, 5-end detector plate, 6-detector plate.

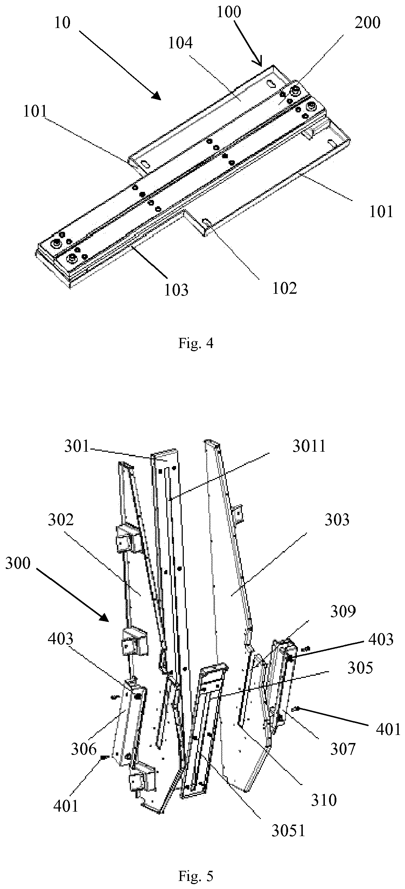

In Fig. 4 to Fig. 8: 10-collimator, 11-end detector plate, 100-T-shaped base plate, 101-folded portion, 102-fixing hole, 103-longitudinal plate of the T-shaped base plate, 104-transverse plate of the T-shaped base plate, 200-lead plate, 300-shielding box, 301-connecting plate, 3011-first ray opening, 302-left plate, 303-right plate, 304-cover plate, 305-supporting plate, 3051-second ray opening, 306-left adjusting box, 307-right adjusting box, 308-top cover, 309-groove, 310-stopping portion, 401-adjusting screw, 402-locking nut, 403-fixing screw, 404-fixing nut.

### DETAILED DESCRIPTION

The technical solutions of the present disclosure will be further described below in conjunction with the accompanying drawings and specific embodiments.

As shown in Fig. 4, a collimator 10 includes a T-shaped base plate 100 and two lead plates 200. The two lead plates 200 are arranged side by side and in parallel to each other, fixed on a longitudinal plate 103 of the T-shaped base plate 100 and extends to a transverse plate 104, wherein a surface of each lead plate 200 which is fitted onto the T-shaped base plate 100 is a mounting surface. In order to facilitate mounting and to minimize the device to a smallest useful size, two opposite ends of each lead plate 200 are aligned with one end of the longitudinal plate 103 of the T-shaped base plate 100 and an edge of the transverse plate 104 of the T-shaped base plate 100 respectively, and respective outer sides of the two lead plates 200 are aligned with two opposite sides of the longitudinal plate 103, respectively. Preferably, the T-shaped base plate 100 comprises folded portions 101 at its edges which face the lead plates 200, that is, the folded portions 101 are disposed at the same side with the mounting surfaces of the lead plates 200. The folded portions 101 can improve the strength of the T-shaped base plate 100, and meanwhile part of the folded portions 101 can function as engaging members and connecting members when the collimator 10 is mounted. In order to facilitate the mounting of the collimator 10, the transverse plate 104 of the T-shaped base plate 100 further comprises fixing holes 102 at its four corners, for performing bolt fastening on the collimator 10. In order to facilitate position adjustment during the bolt fastening, the fixing hole 102 is designed as a kidney-shaped hole.

As shown in Fig. 5 to Fig. 8, a collimator mounting device includes a shielding box 300. The shielding box 300 comprises a first ray opening 3011. The collimator 10 as described above is obliquely inserted into the shielding box 300, with a gap between the two lead plates 200 in the collimator 10 aligned with the first ray opening 3011.

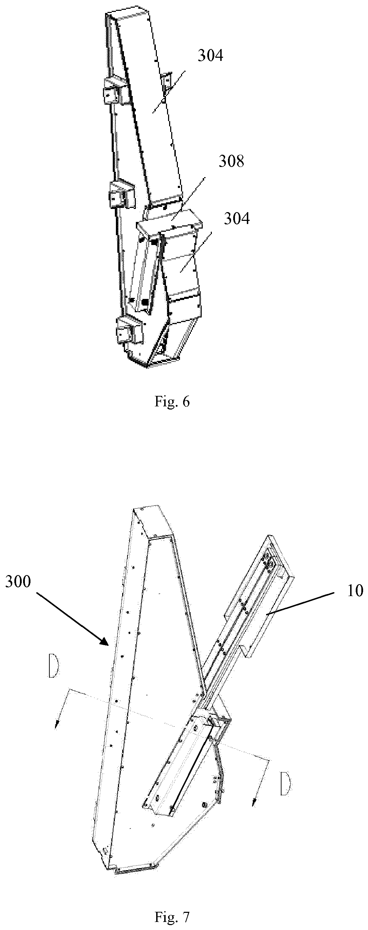

Specifically, as shown in Fig. 5, the shielding box 300 is constituted by an intermediate connecting plate 301, a left plate 302, a right plate 303, and a cover plate 304 (as shown in Fig. 6, the cover plate 304 is divided into two parts), wherein the first ray opening 3011 is provided in the intermediate connecting plate 301. The transverse plate 104 of the T-shaped base plate 100 in the collimator 10 is obliquely inserted onto the left and right plates 302, 303. Each of the left and right plates 302 and 303 comprises an oblique groove 309, into which the transverse plate 104 of the T-shaped base plate 100 in the collimator 10 can be inserted, and each groove 309 extends in an acute angle relative to the intermediate connecting plate 301. Each groove 309 comprises a stopping edge 310 at its bottom. In the case that the transverse plate 104 of the T-shaped base plate 100 is inserted into the grooves 309, the folded portions 101 at the edges of the transverse plate 104 connected to the longitudinal plate 103 engage with the stopping edges 310. In order to facilitate the insertion of the collimator 10 onto the left and right plates 302, 303, a supporting plate 305 is obliquely disposed between the left and right plates 302, 303. The supporting plate 305 is disposed adjacent to and parallel to the grooves 309, and not only can serve as a guide for the mounting of the collimator 10, but also can support the collimator 10 thereon. In the case that the collimator 10 is inserted into place, the T-shaped base plate 100 abuts against the supporting plate 305. Since the supporting plate 305 is parallel to an extending direction of the grooves 309, the same acute angle is formed between the intermediate connecting plate 301 and the supporting plate 305. Therefore, the same acute angle is also formed between the collimator 10 and the intermediate connecting plate 301. The supporting plate 305 comprises a second ray opening 3051, wherein the gap between the two lead plates 200 is aligned with the second ray opening 3051, after the collimator 10 is disposed on the supporting plate 305.

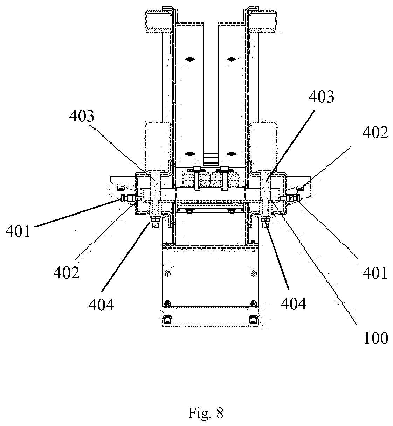

In order to facilitate fine position adjustment of the collimator 10 relative to the shielding box 300, as shown in Fig. 5, the left and right plates 302, 303 are respectively provided with a left adjusting box 306 and a right adjusting box 307. Two opposite sides of the transverse plate 104 of the T-shaped base plate 100 in the collimator 10 are respectively accommodated within the left and right adjusting boxes 306, 307 after protruding out of the grooves 309. As shown in Fig. 8, each of the left and right adjusting boxes 306, 307 is provided with an adjusting screw 401 and a locking nut 402. The adjusting screw 401 on the left adjusting box 306 is arranged to pass through the locking nut 402 and the left adjusting box 306 sequentially, with an end portion abutting against the folded portion 101 at the edge on one side (left side as shown in Fig. 8) of the transverse plate 104 of the T-shaped base plate 100, and the adjusting screw 401 on the right adjusting box 307 is arranged to pass through the locking nut 402 and the right adjusting box 307 sequentially, with an end portion abutting against the folded portion 101 at the edge on the other side (right side as shown in Fig. 8) of the transverse plate 104 of the T-shaped base plate 100. As a result, the fine adjustment of the collimator on the left and right direction can be achieved by adjusting the adjusting screws 401 on the left and right sides of the shielding box. After the adjustment is completed, as shown in Fig. 5 and Fig. 8, fixing screws 403 are arranged to respectively pass through the left and right adjusting boxes 306 and 307 and the corresponding fixing holes 102 on the T-shaped base plate 100, and then screwed to their respective fixing nuts 404, so as to complete the fixing of the collimator 10.

Finally, a top cover 308 can be used to cover the grooves 309, thereby completing the mounting of the collimator 10. As shown in Fig. 6, after the mounting is completed, the top cover 308 is inserted on the left and right plates 302, 303.

The specific process of mounting the collimator 10 to the shielding box 300 is described as below.

As shown in Figs. 7 and 8, at first, the collimator 10 is inserted into the shielding box along the supporting plate 305, with the transverse plate of the T-shaped base plate 100 in the collimator 10 placed in the grooves 309 of the left and right plates 302, 303. In the case that the collimator 10 is inserted in position, the folded portions 101 at the edges of the transverse plate 104 of the T-shaped base plate 100 connected to the longitudinal plate 103 engage with the stopping edges 310. In this state, as shown in Fig. 6, the T-shaped base plate 100 abuts against the supporting plate 305, the gap between the two lead plates 200 is aligned with the first ray opening 3011 and the second ray opening 3051, and two opposite sides of the transverse plate 104 of the T-shaped base plate 100 are accommodated within the left and right adjusting boxes 306, 307, respectively. As shown in Fig. 8, when the collimator 10 needs to move right, loosening the locking nuts 402 for locking the adjusting screws 401 respectively on the left and right adjusting boxes 306, 307 and simultaneously adjusting the two adjusting screws 401 to the right, such that the adjusting screw 401 on the left adjusting box 306 presses against the left side folded portion 101 of the T-shaped base plate 100 and pushes the T-shaped base plate 100 to the right; after the collimator 10 is adjusted in position, simultaneously adjusting the two adjusting screws 401 towards the middle of the shielding box 300 such that the T-shaped base plate 100 is clamped; and finally, tightening the locking nuts 402. When the collimator 10 needs to move left, loosening the locking nuts 402 for locking the adjusting screws 401 respectively on the left and right adjusting boxes 306, 307 and then simultaneously adjusting the two adjusting screws 401 to the left, such that the adjusting screw 401 on the right adjusting box 307 presses against the right side folded portion 101 of the T-shaped base plate 100 and pushes the T-shaped base plate 100 to the left; after the collimator 10 is adjusted in position, simultaneously adjusting the two adjusting screws 401 towards the middle of the shielding box 300 such that the T-shaped base plate 100 is clamped; and finally, tightening the locking nuts 402. After the adjustment is finished, two fixing screws 403 are penetrated through the left adjusting box 306 and the respective fixing holes 102 on the T-shaped base plate 100 and then screwed to their respective fixing nuts 404, and another two fixing screws 403 are penetrated through the right adjusting box 307 and the respective fixing holes 102 on the T-shaped base plate 100 and then screwed to their respective fixing nuts 404, so as to complete the fixing of the collimator 10. Finally, as shown in Fig. 6, the top cover 308 is covered on the grooves 309, and the mounting of the collimator 10 is finished. The opposite steps can be performed when removing the collimator 10.

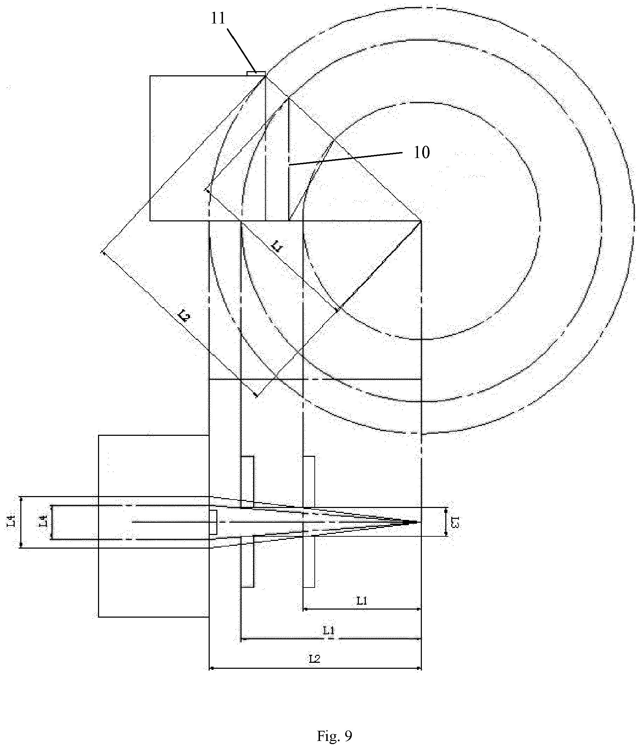

In the collimator 10 and the mounting device thereof as described above, the base plate is formed in a member of T-shape, which not only can provide sufficient mounting space for the two lead plates 200, thus shortening the length of the lead plates to reduce deformation, but also can facilitate the insertion of the collimator 10 so as to enable the collimator 10 to be directly and obliquely inserted on the shielding box 300, facilitating the assembly, disassembly and adjustment of the collimator 10. Moreover, the operator can directly operate on the device in a standing posture, which is convenient and labor-saving. Further, in the mounting device with the collimator obliquely inserted thereon, arrangement space of the electrical components at the bottom of the device are not occupied, which can solve the problem that the illuminated area on the end detector plate is small and that the collimator is difficult to be adjusted. As shown in Fig. 9, with an oblique collimator, an illuminated area on the end detector plate 11 has a larger width L4 (=L3×L2/L1) compared to the case that the collimator is disposed vertically (as shown in Fig. 3), resulting in that the plate is easy to adjust (in Fig. 9, L1: a distance between a target of a radiation machine and a collimator, L2: a distance between the target of the radiation machine and a strip crystal of detector plate, L3: a width of a collimating slit, and L4: a width of rays projecting on the detector plate after passing through the collimating slit).

The security inspection machine comprises a radiation emitting device which is applied with the collimator 10 provided in the embodiment, and further comprises the collimator mounting device as described above for mounting of the collimator. Thus, it is easier for assembly and adjustment of the security inspection machine.

It is apparent that the above-described embodiments of the present disclosure are merely illustrative of the present disclosure for clearly describing the present disclosure, and are not intended to limit the embodiments of the present disclosure. Other variations or changes of the various forms may be made by those skilled in the art in light of the above description. There is no need and no way to exhaust all of the implementations.

## Claims

1. A system comprising a collimator (10) and a collimator mounting device, **characterized in that**,
the collimator (10) comprises:
a T-shaped base plate (100), comprising a longitudinal plate (103) and a transverse plate (104); and
two lead plates (200) arranged side by side and in parallel to each other, wherein the two lead plates (200) are fixed to the longitudinal plate (103) of the T-shaped base plate (100) and extend to the transverse plate (104) of the T-shaped base plate (100), and
the collimator mounting device comprises a shielding box (300), and the shielding box (300) is formed in a box shape constituted by an intermediate connecting plate (301), a left plate (302), a right plate (303) and a cover plate (304), wherein a first ray opening (3011) is provided in the intermediate connecting plate (301), the transverse plate (104) of the T-shaped base plate (100) in the collimator (10) is obliquely inserted into grooves (309) of the left and right plates (302, 303) so that an acute angle is formed between the collimator (10) and the intermediate connecting plate (301) and that a gap between the two lead plates (200) of the collimator (10) is aligned with the first ray opening (3011).

2. The system according to claim 1, **characterized in that** the two lead plates (200) are arranged such that two opposite ends of each lead plate (200) are aligned with one end of the longitudinal plate (103) of the T-shaped base plate (100) and an edge of the transverse plate (104) respectively, and respective outer sides of the lead plates (200) are aligned with two opposite sides of the longitudinal plate (103) respectively.

3. The system according to claim 1, **characterized in that**, the T-shaped base plate (100) comprises folded portions (101) at its edges which face the lead plates (200).

4. The system according to claim 1, **characterized in that**, the transverse plate (104) of the T-shaped base plate (100) further comprises fixing holes (102) at its four corners.

5. The system according to claim 4, **characterized in that**, each fixing hole (102) is formed as a kidney-shaped slot.

6. The system according to claim 1, **characterized in that**, a supporting plate (305) is obliquely disposed between the left and right plates (302, 303), wherein the supporting plate (305) comprises a second ray opening (3051); the collimator (10) is mounted on the supporting plate (305) with the gap between the two lead plates (200) aligned with the second ray opening (3051).

7. The system according to claim 6, **characterized in that**, a left adjusting box (306) is provided on the left plate (302) and a right adjusting box (307) is provided on the right plate (303), wherein two opposite sides of the transverse plate (104) of the T-shaped base plate (100) are accommodated within the left and right adjusting boxes (306, 307) respectively, and the T-shaped base plate (100) is fixedly connected to the left and right adjusting boxes (306, 307) after a fine adjustment of the collimator (10) is completed.

8. The system according to claim 7, **characterized in that**, the supporting plate (305) is disposed adjacent to the grooves (309) and parallel to an extending direction of the grooves (309), wherein the transverse plate (104) of the T-shaped base plate (100) is inserted into the grooves (309), and the collimator mounting device further comprises a top cover (308) covering the grooves (309).

9. A security inspection machine comprising a radiation emitting device, **characterized in that**, the radiation emitting device is provided with the system according to any of claims 1-8.

10. A method of mounting a collimator (10) to a collimator mounting device, **characterized by** the steps of:
inserting the collimator (10) obliquely into a shielding box (300) along a supporting plate (305), wherein a transverse plate (104) of a T-shaped base plate (100) in the collimator (10) is placed in grooves (309) of left and right plates (302, 303), and two opposite sides of the transverse plate (104) are accommodated within left and right adjusting boxes (306, 307) respectively;
adjusting a position of the collimator (10) to align a gap between two lead plates (200) with a first ray opening (3011) of the shielding box (300) and a second ray opening (3051) on the supporting plate (305);
fixedly connecting the left and right adjusting boxes (306, 307) with the T-shaped base plate (100), after finely adjusting a position of the T-shaped base plate (100) in the collimator (10); and
covering a top cover (308) on the grooves (309).

## Patentansprüche

1. System, das einen Kollimator (10) und eine Kollimatormontiervorrichtung umfasst, **dadurch gekennzeichnet, dass**
der Kollimator (10) umfasst:
eine T-förmige Grundplatte (100), die eine längslaufende Platte (103) und eine querlaufende Platte (104) umfasst; und
zwei Führungsplatten (200), die Seite an Seite und parallel zueinander angeordnet sind, wobei die beiden Führungsplatten (200) an der längslaufenden Platte (103) der T-förmigen Grundplatte (100) befestigt sind und sich zur querlaufenden Platte (104) der T-förmigen Grundplatte (100) erstrecken, und
die Kollimatormontiervorrichtung eine Abschirmbox (300) umfasst, und die Abschirmbox (300) in Boxform gebildet ist, die durch eine Zwischenverbindungsplatte (301), eine linke Platte (302), eine rechte Platte (303) und eine Abdeckplatte (304) aufgebaut ist, wobei eine erste Strahlenöffnung (3011) in der Zwischenverbindungsplatte (301) vorgesehen ist, die querlaufende Platte (104) der T-förmigen Grundplatte (100) im Kollimator (10) schräg in Nuten (309) der linken und rechten Platte (302, 303) eingesetzt ist, so dass ein spitzer Winkel zwischen dem Kollimator (10) und der Zwischenverbindungsplatte (301) gebildet ist und dass ein Spalt zwischen den beiden Führungsplatten (200) des Kollimators (10) mit der ersten Strahlenöffnung (3011) ausgerichtet ist.

2. System nach Anspruch 1, **dadurch gekennzeichnet, dass** die beiden Führungsplatten (200) so angeordnet sind, dass zwei entgegengesetzte Enden einer jeden Führungsplatte (200) mit jeweils einem Ende der längslaufenden Platte (103) der T-förmigen Grundplatte (100) und einer Kante der querlaufenden Platte (104) ausgerichtet sind, und jeweilige Außenseiten der Führungsplatten (200) jeweils mit zwei entgegengesetzten Seiten der längslaufenden Platte (103) ausgerichtet sind.

3. System nach Anspruch 1, **dadurch gekennzeichnet, dass** die T-förmige Grundplatte (100) gefaltete Abschnitte (101) an ihren Kanten umfasst, die den Führungsplatten (200) zugewandt sind.

4. System nach Anspruch 1, **dadurch gekennzeichnet, dass** die querlaufende Platte (104) der T-förmigen Grundplatte (100) ferner Befestigungslöcher (102) an ihren vier Ecken umfasst.

5. System nach Anspruch 4, **dadurch gekennzeichnet, dass** jedes Befestigungsloch (102) als nierenförmiger Schlitz gebildet ist.

6. System nach Anspruch 1, **dadurch gekennzeichnet, dass** eine Abstützplatte (305) schräg zwischen der linken und rechten Platte (302, 303) angeordnet ist, wobei die Abstützplatte (305) eine zweite Strahlenöffnung (3051) umfasst; wobei der Kollimator (10) an der Abstützplatte (305) montiert ist, so dass der Spalt zwischen den beiden Führungsplatten (200) mit der zweiten Strahlenöffnung (3051) ausgerichtet ist.

7. System nach Anspruch 6, **dadurch gekennzeichnet, dass** eine linke Anpassungsbox (306) an der linken Platte (302) vorgesehen ist und eine rechte Anpassungsbox (307) an der rechten Platte (303) vorgesehen ist, wobei zwei entgegengesetzte Seiten der querlaufenden Platte (104) der T-förmigen Grundplatte (100) jeweils innerhalb der linken und rechten Anpassungsbox (306, 307) aufgenommen sind, und die T-förmige Grundplatte (100) mit der linken und rechten Anpassungsbox (306, 307) fest verbunden ist, nachdem eine Feinanpassung des Kollimators (10) fertiggestellt ist.

8. System nach Anspruch 7, **dadurch gekennzeichnet, dass** die Abstützplatte (305) angrenzend an die Nuten (309) und parallel zu einer Erstreckungsrichtung der Nuten (309) angeordnet ist, wobei die querlaufende Platte (104) der T-förmigen Grundplatte (100) in die Nuten (309) eingesetzt ist, und die Kollimatormontiervorrichtung ferner eine obere Abdeckung (308) umfasst, die die Nuten (309) abdeckt.

9. Sicherheitsüberprüfungsmaschine, die eine Strahlungsemissionsvorrichtung umfasst, **dadurch gekennzeichnet, dass** die Strahlungsemissionsvorrichtung mit dem System nach einem der Ansprüche 1 bis 8 versehen ist.

10. Verfahren zum Montieren eines Kollimators (10) an einer Kollimatormontiervorrichtung, **gekennzeichnet durch** die Schritte eines:
Einsetzens des Kollimators (10) schräg in eine Abschirmbox (300) entlang einer Abstützplatte (305), wobei eine querlaufende Platte (104) einer T-förmigen Grundplatte (100) in dem Kollimator (10) in Nuten (309) der linken und rechten Platte (302, 303) platziert ist, und zwei entgegengesetzte Seiten der querlaufenden Platte (104) jeweils in einer linken und rechten Anpassungsbox (306, 307) aufgenommen sind;
Anpassens einer Position des Kollimators (10), um einen Spalt zwischen zwei Führungsplatten (200) mit einer ersten Strahlenöffnung (3011) der Abschirmbox (300) und einer zweiten Strahlenöffnung (3051) an der Abstützplatte (305) auszurichten;
festen Verbindens der linken und rechten Anpassungsbox (306, 307) mit der T-förmigen Grundplatte (100), nach einem feinen Anpassen einer Position der T-förmigen Grundplatte (100) in dem Kollimator (10); und
Abdeckens einer oberen Abdeckung (308) an den Nuten (309).

## Revendications

1. Système comprenant un collimateur (10) et un dispositif de montage de collimateur, **caractérisé en ce que**
le collimateur (10) comprend :
une plaque de base en forme de T (100) comprenant une plaque longitudinale (103) et une plaque transversale (104) ; et
deux plaques de plomb (200) agencées côte à côte et en parallèle l'une de l'autre, dans lequel les deux plaques de plomb (200) sont fixées à la plaque longitudinale (103) de la plaque de base en forme de T (100) et s'étendent jusqu'à la plaque transversale (104) de la plaque de base en forme de T (100), et
le dispositif de montage de collimateur comprend une boîte de protection (300), et la boîte de protection (300) est réalisée en une forme de boîte constituée par une plaque de liaison intermédiaire (301), une plaque gauche (302), une plaque droite (303) et une plaque de recouvrement (304), dans lequel une première ouverture de rayons (3011) est prévue dans la plaque de liaison intermédiaire (301), la plaque transversale (104) de la plaque de base en forme de T (100) dans le collimateur (10) est insérée en oblique dans des rainures (309) des plaques gauche et droite (302, 303) de sorte qu'un angle aigu soit formé entre le collimateur (10) et la plaque de liaison intermédiaire (301) et qu'une fente entre les deux plaques de plomb (200) du collimateur (10) soit alignée sur la première ouverture de rayons (3011).

2. Système selon la revendication 1, **caractérisé en ce que** les deux plaques de plomb (200) sont agencées de sorte que deux extrémités opposées de chaque plaque de plomb (200) soient alignées sur une extrémité de la plaque longitudinale (103) de la plaque de base en forme de T (100) et une arête de la plaque transversale (104) respectivement, et des côtés extérieurs respectifs des plaques de plomb (200) soient alignés sur deux côtés opposés de la plaque longitudinale (103) respectivement.

3. Système selon la revendication 1, **caractérisé en ce que** la plaque de base en forme de T (100) comprend des parties pliées (101) au niveau de ses arêtes qui font face aux plaques de plomb (200).

4. Système selon la revendication 1, **caractérisé en ce que** la plaque transversale (104) de la plaque de base en forme de T (100) comprend en outre des trous de fixation (102) au niveau de ses quatre coins.

5. Système selon la revendication 4, **caractérisé en ce que** chaque trou de fixation (102) est formé comme une fente réniforme.

6. Système selon la revendication 1, **caractérisé en ce qu'**une plaque de support (305) est disposée en oblique entre les plaques gauche et droite (302, 303), dans lequel la plaque de support (305) comprend une seconde ouverture de rayons (3051) ; le collimateur (10) est monté sur la plaque de support (305), la fente entre les deux plaques de plomb (200) étant alignées sur la seconde ouverture de rayons (3051).

7. Système selon la revendication 6, **caractérisé en ce qu'**une boîte d'ajustement gauche (306) est prévue sur la plaque gauche (302) et une boîte d'ajustement droite (307) est prévue sur la plaque droite (303), dans lequel deux côtés opposés de la plaque transversale (104) de la plaque de base en forme de T (100) sont logés à l'intérieur des boîtes d'ajustement gauche et droite (306, 307) respectivement, et la plaque de base en forme de T (100) est fixement reliée aux boîtes d'ajustement gauche et droite (306, 307) après l'achèvement d'un ajustement fin du collimateur (10).

8. Système selon la revendication 7, **caractérisé en ce que** la plaque de support (305) est disposée de manière adjacente aux rainures (309) et parallèle à une direction d'extension des rainures (309), dans lequel la plaque transversale (104) de la plaque de base en forme de T (100) est insérée dans les rainures (309), et le dispositif de montage de collimateur comprend en outre un couvercle supérieur (308) recouvrant les rainures (309).

9. Machine d'inspection de sécurité comprenant un dispositif d'émission de radiations, **caractérisé en ce que** le dispositif d'émission de radiations est doté du système selon l'une quelconque des revendications 1 à 8.

10. Procédé de montage d'un collimateur (10) sur un dispositif de montage de collimateur, **caractérisé par** les étapes consistant à :
insérer le collimateur (10) en oblique dans une boîte de protection (300) le long d'une plaque de support (305), dans lequel une plaque transversale (104) d'une plaque de base en forme de T (100) dans le collimateur (10) est placée dans des rainures (309) des plaques gauche et droite (302, 303), et deux côtés opposés de la plaque transversale (104) sont logés à l'intérieur des boîtes d'ajustement gauche et droite (306, 307) respectivement ;
ajuster une position du collimateur (10) pour aligner une fente entre deux plaques de plomb (200) sur une première ouverture de rayons (3011) de la boîte de protection (300) et sur une seconde ouverture de rayons (3051) sur la plaque de support (305) ;
relier fixement les boîtes d'ajustement gauche et droite (306, 307) à la plaque de base en forme de T (100) après l'ajustement fin d'une position de la plaque de base en forme de T (100) dans le collimateur (10) ; et
recouvrir un couvercle supérieur (308) sur les rainures (309).
